# EUROPÄISCHE PATENTSCHRIFT

(11) **EP 2 993 347 B1**
(45) Veröffentlichungstag und Bekanntmachung des Hinweises auf die Patenterteilung: **14.03.2018**
(21) Anmeldenummer: 15001764.8
(22) Anmeldetag: 15.06.2015
(51) Int. Cl.: F04B 17/05, F04B 17/06, F04B 23/02, F04B 49/22, F16H 61/431

(54) **ANTRIEBSEINRICHTUNG FÜR EINE GÜLLEPUMPE**
DRIVE DEVICE FOR A LIQUID MANURE PUMP
DISPOSITIF D'ENTRAINEMENT D'UNE POMPE A LISIER

(30) Priorität: 08.09.2014 DE 102014013252
(43) Veröffentlichungstag der Anmeldung: 09.03.2016
(73) Patentinhaber: Hydac International GmbH, 66280 Sulzbach/Saar (DE)
(72) Erfinder: Scheibel, Jörg, 46242 Bottrop (DE); Hein, Harry, 89278 Nersingen (DE)
(74) Vertreter: Bartels und Partner, Patentanwälte

(56) Entgegenhaltungen:
- EP-A1- 2 105 638
- EP-A1- 2 131 027
- WO-A1-2009/065383
- DE-T2- 69 512 881
- KR-A- 20100 031 441
- US-A- 5 141 363
- US-A1- 2010 329 892
- US-A1- 2013 312 397

## Beschreibung

Die Erfindung betrifft eine Antriebseinrichtung für eine Güllepumpe mit den Merkmalen im Oberbegriff von Anspruch 1.

Im Besonderen bezieht sich die Erfindung auf das Ausbringen von aus der Nutztierhaltung anfallender Gülle zur Düngung von Ackerflächen. Um bei großen, zu bewirtschaftenden Flächen ein wirtschaftliches Düngen mit kurzen Arbeitszeiten durchzuführen, kommen Gülletankwagen zum Einsatz, die Fassvolumina von mehr als 15 m³ haben können. Derartige Tankwagen, die meist als Anhänger eines Schleppers ausgebildet und mit einem Schwerlastfahrwerk ausgerüstet sind, können für das Ausbringen der Gülle sog. Schleppschlauchgestänge aufweisen, die auf eine Ausbringbreite von z.B. 15 Metern vom Wagen seitlich ausklappbar sind und in der Art eines Rechens eine Vielzahl von Austrittsstellen aufweisen, die von der dem Tankwagen zugehörigen Güllepumpe über Schläuche versorgbar sind. Der Antrieb der Güllepumpe erfolgt hierbei über eine Antriebseinrichtung, die über eine Zapfwelle mit einem Verbrennungsmotor gekoppelt ist, in der Regel mit dem Motor des zugehörigen Schleppers oder in den selteneren Fällen eines selbstfahrenden Gülletankwagens, mit dessen Antriebsmotor.

Die Fachzeitschrift "Profi", 4/2014, Seiten 22 bis 25, zeigt den diesbezüglichen Stand der Technik, wobei für die Güllepumpe eines Gülletankwagens eine Antriebseinrichtung der eingangs genannten Art vorgesehen ist. Der dort gezeigte Tankwagen ist mit einem Fassvolumen von 18,5 m³ als Anhänger mit einem Tandemfahrwerk konzipiert. Die für die Versorgung der Gülle-Verteilereinrichtung, beispielsweise in Form eines Schleppschlauchgestänges, dienende Güllepumpe ist von der zugehörigen Antriebseinrichtung mittels eines Hydromotors hydraulisch betätigbar. Im Unterschied zu früheren Lösungen, bei denen die Güllepumpe unmittelbar mechanisch mittels der betreffenden Zapfwelle antreibbar ist, ermöglicht der hydraulische Antrieb eine von der Zapfwellendrehzahl unabhängige Drehzahlregelung der Güllepumpe, so dass der schwerwiegende Nachteil vermieden ist, dass die Ausbringmenge in direkter Beziehung zur Zapfwellendrehzahl steht, die nicht beliebig oder zumindest nicht in bedarfsgerechter Weise veränderbar ist.

Die in dem genannten Bericht als Stand der Technik aufgezeigte Antriebseinrichtung ermöglicht demgegenüber durch die hydraulische Betätigung der Güllepumpe mittels einer Axialkolbenpumpe mit veränderbarem Schwenkbereich und mit zugeordnetem Hydromotor den von der Zapfwellendrehzahl unabhängigen Betrieb der Güllepumpe. Angesichts der geltenden Umweltschutzgesetze mit den Vorschriften zum Gewässerschutz, zum Immissionsschutz und dergleichen, müssen die diesbezüglich erlaubten Ausbringmengen pro Flächeneinheit der Ackerfläche sehr genau eingehalten werden, zumal mit Kontrollen durch Bodenproben zu rechnen ist und bei Nichteinhaltung drastische Strafen zu erwarten sind.

Die WO 2009/065383 A1 beschreibt eine Antriebseinrichtung mit einem Fluidkreislauf, der einen mit einer Pumpe mechanisch gekoppelten Hydromotor, eine Zapfwelle und eine den Hydromotor mit Druckfluid versorgende Axialkolbenpumpe mit veränderbarem Schwenkwinkel aufweist, die von der mit einem Verbrennungsmotor verbindbaren Zapfwelle antreibbar ist, wobei der dem Hydromotor von der Axialkolbenpumpe zugeführte Volumenstrom mittels eines Proportionalventils steuerbar ist und wobei ein von diesem geliefertes Load-Sensing-Signal für die Schwenkwinkelregelung der Axialkolbenpumpe vorgesehen ist. Das von dem Hydromotor zurückfließende Fluid wird über das Proportionalventil zu einem Tank vollständig und direkt zurückgeführt.

Weitere Antriebsvorrichtungen gehen aus der US 5 141 363, der DE 695 12 881 T2, der KR 10-2010-0031441, der US 2010/0329892 A1, der EP 2 105 638 A1 und der EP 2 131 027 A1 hervor.

Im Hinblick auf diese Problematik liegt der Erfindung die Aufgabe zugrunde, eine Antriebseinheit für eine Güllepumpe zur Verfügung zu stellen, die, bei Beibehalten der durch den erwähnten Stand der Technik erreichten Vorteile, eine weiter verbesserte Genauigkeit der Regelung der Förderleistung der Güllepumpe ermöglicht.

Erfindungsgemäß ist diese Aufgabe durch eine Antriebseinrichtung gelöst, die die Merkmale des Patentanspruchs 1 in seiner Gesamtheit aufweist.

Demgemäß zeichnet sich die Erfindung dadurch aus, dass der Fluidkreislauf in einer das vom Hydromotor zurückfließende Fluid führenden Rücklaufleitung ein Rücklaufsaugfilter aufweist, dessen Reinseite über ein Vorspannventil und ein Nachsaugventil mit einem Fluidvorratstank sowie mit der Saugseite der Axialkolbenpumpe verbunden ist. Dadurch gelangt das rückfließende Fluid, ohne dass es bei geschlossenem Vorspannventil zum Tank gelangt, zur Saugseite der Axialkolbenpumpe. Bei dem so gebildeten halboffenen Fluidkreis kann daher der Tank in vorteilhafter Weise kleinvolumig ausgebildet werden.

Es ist ferner vorgesehen, dass der Volumenstrom, der dem die Güllepumpe antreibenden Hydromotor zugeführt wird, mittels eines Proportionalventils steuerbar ist, wobei ein von diesem geliefertes Load-Sensing-Signal für die Schwenkwinkelregelung der Axialkolbenpumpe vorgesehen ist. Dadurch, dass dergestalt, zusätzlich zu der nach Maßgabe eines Load-Sensing-Signals erfolgenden Schwenkwinkeleinstellung der Axialkolbenpumpe, für den den Hydromotor versorgenden Volumenstrom ein zusätzliches Steuerelement in Form eines Proportionalventils zur Verfügung steht, ist eine Steuerung der Förderleistung unabhängig von der durch Betriebsgrenzen der Axialkolbenpumpe eingeschränkten Schwenkwinkelregelung der Axialpumpen möglich, so dass eine Feinregelung über den gesamten Drehzahlbereich der aus Hydromotor und Güllepumpe gebildeten Einheit möglich ist.

Mit besonderem Vorteil kann ein Proportionalventil in Form eines elektromagnetisch betätigbaren 4/3-Wegeventils vorgesehen sein. Dadurch kann die Steuerung des Schwenkwinkels der Axialkolbenpumpe über das bei Gülletankwagen normalerweise vorhandene elektronische Steuersystem erfolgen.

Für das rückfließende Fluid kann in vorteilhafter Weise in der Rücklaufleitung ein stromaufwärts des Rücklaufsaugfilters gelegener Kühler vorgesehen sein, der mit dem Stand der Technik entsprechenden Einrichtungen zur Einhaltung optimaler Betriebstemperaturen ausgerüstet sein kann.

Bei besonders vorteilhaften Ausführungsbeispielen ist eine mit der Zapfwelle verbundene Konstantpumpe vorgesehen, die dem Eingang des Rücklaufsaugfilters aus dem Vorratstank eine Fluidmenge zuführt, die den durch Abströmen von Lecköl resultierenden Fluidverlust zumindest ausgleicht. Die Konstantpumpe kann mit Vorteil derart ausgelegt sein, dass am Rücklaufsaugfilter eine Überschussmenge von ca. 10 % zur Verfügung steht und dadurch das Vorspannventil den gewünschten Vorspanndruck aufrechterhält.

In besonders vorteilhafter Weise kann ein Hilfs-Hydromotor vorgesehen sein, der durch den von der Konstantpumpe erzeugten Volumenstrom antreibbar und für die Betätigung von Nebenaggregaten vorgesehen ist. In besonders vorteilhafter Weise kann dadurch ein dem Kühler zugehöriger Lüftermotor mittels der Hilfs-Hydropumpe antreibbar sein, die mit Vorteil durch eine Zahnradpumpe gebildet sein kann.

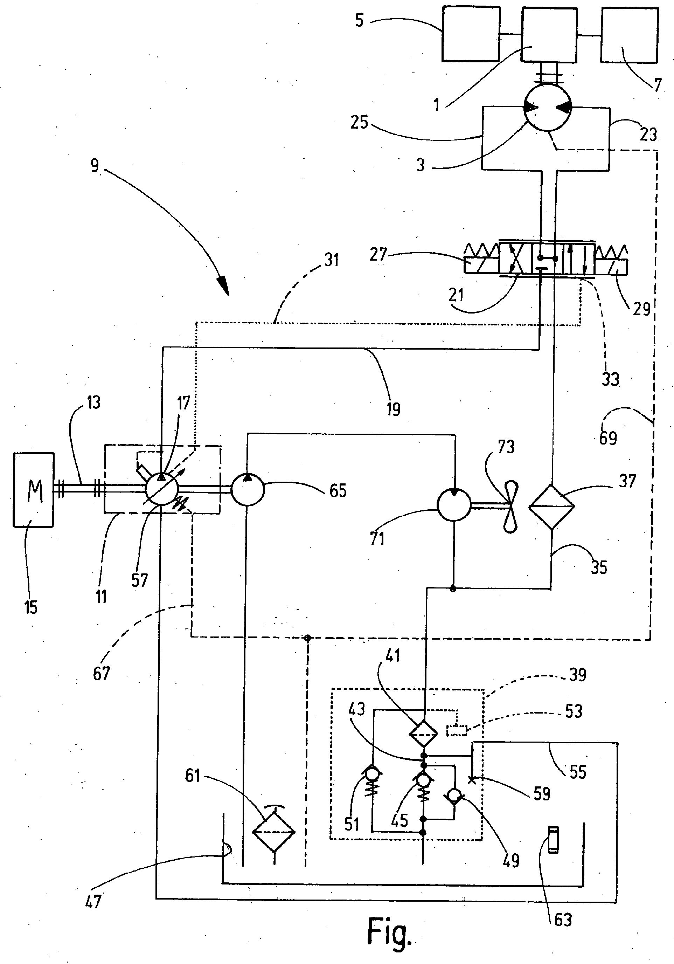

Nachstehend ist die Erfindung anhand eines in der Zeichnung dargestellten Ausführungsbeispiels im Einzelnen erläutert, wobei in der einzigen Figur der Zeichnung die hydraulische Schaltung des Ausführungsbeispiels in Symboldarstellung gezeigt ist.

Die erfindungsgemäße Antriebseinrichtung ist für den Antrieb einer in der Figur mit 1 bezeichneten Güllepumpe eines nicht dargestellten Gülletankwagens vorgesehen, wie er beispielhaft in der den Stand der Technik darstellenden, genannten Fachzeitschrift "Profi" 4/2014 gezeigt ist. Es versteht sich, dass die Erfindung gleichermaßen vorteilhaft bei anders aufgebauten Tankwagen einsetzbar ist, beispielsweise auch bei selbstfahrenden Tankwagen. Die Güllepumpe 1 ist durch einen Hydromotor 3 antreibbar, der in beiden Drehrichtungen antreibbar ist, so dass die Pumpe 1 bei einer Drehrichtung Gülle aus einem Gülletank 5 mit einem von der Drehzahl des Hydromotors 3 und damit der Drehzahl der Güllepumpe 1 abhängigen Volumenstrom einer zugehörigen Verteilereinrichtung 7 zuführt. Die Verteilereinrichtung kann dem Stand der Technik entsprechend ein Schleppschlauchgestänge oder eine andersartige Ausbringeinheit aufweisen, beispielsweise in Form eines sog. Strigers. Wie beim Stand der Technik üblich, wird bei der entgegengesetzten Drehrichtung des Hydromotors 3 über einen in der Symboldarstellung der Figur nicht dargestellten Saugschlauch der Tank des Güllewagens von einem Güllevorrat her befüllt.

Für die hydraulische Betätigung der Güllepumpe 1 durch den Hydromotor 3 weist die Antriebseinrichtung einen Fluidkreislauf 9 auf, bei dem eine Axialkolbenpumpe 11, deren Schwenkwinkel regelbar ist, zur Versorgung des Hydromotors 3 mit Druckfluid, im vorliegenden Fall mit Hydrauliköl, vorgesehen ist. Die Axialkolbenpumpe 11 ist über eine Zapfwelle 13 von einem Verbrennungsmotor 15, in der Regel vom Motor eines dem betreffenden Gülletankwagen zugeordneten Schleppers, antreibbar. Die Druckseite 17 der Axialkolbenpumpe 11 ist über eine Druckleitung 19 mit einem Proportionalventil 21 verbunden. Bei diesem handelt es sich um ein 4/3-Wegeventil, das elektromagnetisch betätigbar ist. In der Figur ist das Proportionalventil 21 in seiner Mittenstellung dargestellt, bei der die Drehzahl der Hydromotor 3 Null beträgt, da ihre beiden Anschlussleitungen 23 und 25 keine Druckdifferenz aufweisen. Bei Betätigen des Proportionalventils 21 aus der Mittenstellung durch Bestromen seiner Betätigungsmagnete 27 bzw. 29 mittels der elektronischen Steuereinrichtung des nicht gezeigten Tankwagens, bildet die Anschlussleitung 23 oder die Anschlussleitung 25 die Druckseite an der Hydromotor 3, so dass diese in der Abgabedrehrichtung oder in der Saugdrehrichtung arbeitet. Als Stetigventil ermöglicht das Proportionalventil 21 hierbei die stufenlose Regelung der Pumpendrehzahl und damit der Förderleistung der Güllepumpe 1 und dementsprechend beim Pumpbetrieb die Regelung der Ausbringmenge über die Verteilereinrichtung 7.

Für die Schwenkwinkelregelung der Axialkolbenpumpe 11 nach Maßgabe des jeweiligen Lastzustandes beim Pumpbetrieb ist die Axialkolbenpumpe 11 über eine L-S-Leitung 31 mit einem Load-Sensing-Anschluss 33 am Proportionalventil 21 verbunden. Das vom Hydromotor 3 über das Proportionalventil 21 rückfließende Öl durchströmt einen in einer Rücklaufleitung 35 angeordneten Ölkühler 37 und gelangt zu einer Rücklaufsaugfiltereinheit 39. Dabei handelt es sich um eine mehrere Komponenten aufweisende Baueinheit, wie sie von der Anmelderin in verschiedenen Spezifikationen als Produktgruppe mit der Bezeichnung RKM-Filter vertrieben wird. Eine derartige Einheit weist ein Filterelement 41 auf, mit dessen Eingangsseite die Rücklaufleitung 35 verbunden ist und dessen Reinseite 43 über ein Vorspannventil 45 mit einem Vorratstank 47 für Hydrauliköl in Verbindung ist. Außerdem ist die Reinseite 43 über ein Nachsaugventil 49 mit dem Tank 47 in Verbindung. Wie bei derartigen Filtereinheiten üblich, sind ein das Filterelement 41 umgehendes Bypassventil 51 und eine Verschmutzungsanzeige 53 vorhanden.

Mit der Rücklaufsaugfiltereinheit 39 bildet der Fluidkreislauf 9 einen halboffenen Kreis, bei dem von der Reinseite 43 des Filterelements 41 über eine Saugleitung 55 das rückfließende Hydrauliköl unmittelbar zur Saugseite 57 der Axialkolbenpumpe 11 gelangt, also ohne dass das über die Rücklaufleitung 35 rückströmende Hydrauliköl in den Tank 47 gelangt. In vorteilhafter Weise kann daher ein sehr klein bemessener Tank 47 benutzt werden. Dabei bleibt ein der Vorspannung des Vorspannventils 45 entsprechender Vorspanndruck, beispielsweise von 0,5 bar, in der Saugleitung 55 aufrechterhalten, während bei Mangelzuständen ein Nachsaugen aus dem Tank 47 über das Nachsaugventil 49 erfolgen kann. Ein der Rücklaufsaugfiltereinheit 39 zugehöriges, an der Saugleitung 55 angeschlossenes Ablassventil 59 ermöglicht eine Entleerung des Systems. Der Tank 47 ist in üblicher Weise mit einem Belüftungsfilter 61 sowie einer Füllstandsanzeige 63 versehen.

Mit der Welle der Axialkolbenpumpe 11 ist eine Konstantpumpe in Form einer Zahnradpumpe 65 verbunden, die auf eine Förderleistung ausgelegt ist, die den über Leckölleitungen 67und 69 von der Axialkolbenpumpe 11 bzw. dem Hydromotor 3 abströmenden und zum Tank 47 gelangenden Ölverlust mehr als ausgleicht. Dabei ist der von der Zahnradpumpe 65 erzeugte Volumenstrom auf eine etwa 10 %ige Überschussmenge ausgelegt, die über einen Hilfs-Hydromotor 71 zur Rücklaufleitung 35 und damit zum Eingang der Rücklaufsaugfiltereinheit 39 gelangt und dadurch die vom Vorspannventil 45 begrenzte Vorspannung an der Saugleitung 55 aufrechterhält. Mittels des Hilfs-Hydromotors 71 sind Zusatz- oder Nebenaggregate betreibbar, beim gezeigten Beispiel ein dem Kühler zugeordneter Lüfter 73.

Da man im Betrieb zumeist an eine festliegende Drehzahl der Zapfwelle 13, in den meisten Fällen von 1000 U/min, gebunden ist und Drehkolbenpumpen, wie die vorliegend vorgesehene Güllepumpe 1, für eine maximale Drehzahl im Bereich von 600 U/min ausgelegt sind, muss der Schwenkwinkel der Axialkolbenpumpe 11 entsprechend in Abhängigkeit von dem vom Proportionalventil 21 über die L-S-Leitung 31 zugeführten Load-Sensing-Signale geregelt werden. Wie bereits erwähnt, ist die dadurch erzielbare Regelung für die zur Einhaltung vorgeschriebener Ausbringmengen erforderliche Feinsteuerung des Betriebs des Hydromotors 3 und damit der Güllepumpe 1 nicht ausreichend. Gemäß der Erfindung ist diese Unzulänglichkeit mit Hilfe des Proportionalventils 21 behoben, das als Stetigventil eine stufenlose Feinsteuerung des dem Hydromotor 3 zugeführten Volumenstroms ermöglicht.

## Patentansprüche

1. Antriebseinrichtung für eine Güllepumpe (1), mit einem Fluidkreislauf (9), der einen mit der Güllepumpe (1) mechanisch gekoppelten Hydromotor (3), eine Zapfwelle (13) und eine den Hydromotor (3) mit Druckfluid versorgende Axialkolbenpumpe (11) mit veränderbarem Schwenkwinkel aufweist, die von der mit einem Verbrennungsmotor (15) verbindbaren Zapfwelle (13) antreibbar ist, wobei der dem Hydromotor (3) von der Axialkolbenpumpe (11) zugeführte Volumenstrom mittels eines Proportionalventils (21) steuerbar ist und wobei ein von diesem geliefertes Load-Sensing-Signal für die Schwenkwinkelregelung der Axialkolbenpumpe (11) vorgesehen ist, **dadurch gekennzeichnet, dass** der Fluidkreislauf (9) in einer das vom Hydromotor (3) zurückfließende Fluid führenden Rücklaufleitung (35) ein Rücklaufsaugfilter (39, 41) aufweist, dessen Reinseite (43) über ein Vorspannventil (45) und ein Nachsaugventil (49) mit einem Fluidvorratstank (47) sowie mit der Saugseite (57) der Axialkolbenpumpe (11) verbunden ist.

2. Antriebseinrichtung nach Anspruch 1, **dadurch gekennzeichnet, dass** ein Proportionalventil in Form eines elektromagnetisch betätigbaren 4/3-Wegeventils (21) vorgesehen ist.

3. Antriebseinrichtung nach einem der vorstehenden Ansprüche, **dadurch gekennzeichnet, dass** in der Rücklaufleitung (35) ein stromaufwärts des Rücklaufsaugfilters (39, 41) gelegener Kühler (37) vorgesehen ist.

4. Antriebseinrichtung nach einem der vorstehenden Ansprüche, **dadurch gekennzeichnet, dass** eine mit der Zapfwelle (13) verbundene Konstantpumpe (65) vorgesehen ist, die dem Eingang des Rücklaufsaugfilters (39, 41) aus dem Vorratstank (47) eine Fluidmenge zuführt, die den durch Abströmen von Lecköl (67, 69) resultierenden Fluidverlust zumindest ausgleicht.

5. Antriebseinrichtung nach Anspruch 4, **dadurch gekennzeichnet, dass** ein Hilfs-Hydromotor (71) vorgesehen ist, der durch den von der Konstantpumpe (65) erzeugten Volumenstrom antreibbar und für die Betätigung von Nebenaggregaten (73) vorgesehen ist.

6. Antriebseinrichtung mit den Merkmalen der Ansprüche 3 und 5, **dadurch gekennzeichnet, dass** ein dem Kühler (37) zugehöriger Lüftermotor (73) als Nebenstromaggregat vom Hilfs-Hydromotor (71) antreibbar ist.

7. Antriebseinrichtung nach einem der Ansprüche 4 bis 6, **dadurch gekennzeichnet, dass** eine Konstantpumpe in Form einer Zahnradpumpe (65) vorgesehen ist.

## Claims

1. A drive device for a liquid manure pump (1), comprising a fluid circuit (9) that has a hydraulic motor (3) coupled mechanically to the liquid manure pump (1), a power take-off shaft (13) and an axial piston pump (11) supplying pressurised fluid to the hydraulic motor (3) and having a changeable swivel angle, which axial piston pump can be driven by the power take-off shaft (13) that can be connected to an internal combustion engine (15), the volumetric flow delivered to the hydraulic motor (3) by the axial piston pump (11) being controllable by means of a proportional valve (21), and a load sending signal delivered by the latter being provided to regulate the swivel angle of the axial piston pump (11), **characterised in that** the fluid circuit (9) has a return flow suction filter (39, 41) in a return flow line (35) conveying the fluid flowing back from the hydraulic motor (3), the clean side (43) of which suction filter is connected via a pre-charge valve (45) and a suction valve (40) to a fluid storage tank (47) and to the suction side (57) of the axial piston pump (11).

2. The drive device according to Claim 1, **characterised in that** a proportional valve in the form of an electromagnetically operable 4/3-way valve (21) is provided.

3. The drive device according to any of the preceding claims, **characterised in that** a cooler (37) located upstream of the return flow suction filter (39, 41) is provided in the return flow line (35).

4. The drive device according to any of the preceding claims, **characterised in that** a fixed displacement pump (65) connected to the power take-off shaft (13) is provided which delivers an amount of fluid, which at the very least compensates for the fluid loss resulting from the outflow of leakage oil (67, 69), from the storage tank (47) to the input of the return flow suction filter (39, 41).

5. The drive device according to Claim 4, **characterised in that** an auxiliary hydraulic motor (71) is provided which may be driven by the volumetric flow generated by the fixed displacement pump (65) and is provided for the operation of ancillary components (73).

6. The drive device having the features of Claims 3 and 5, **characterised in that** a fan motor (73) associated with the cooler (37) can be driven by the auxiliary hydraulic motor (71) as a bypass flow component.

7. The drive device according to any of Claims 4 to 6, **characterised in that** a fixed displacement pump in the form of a geared pump (65) is provided.

## Revendications

1. Dispositif d'entraînement d'une pompe (1) à lisier, comprenant un circuit (9) pour du fluide, qui a un moteur (3) hydraulique accouplé mécaniquement à la pompe (1) à lisier, une prise (13) de force et une pompe (11) à pistons axiaux, qui alimente le moteur (3) hydraulique en fluide sous pression, qui a un angle de pivotement variable et qui peut être entraînée par la prise de force (13) pouvant être reliée à un moteur (15) à combustion interne, le courant en volume, envoyé au moteur (1) hydraulique par la pompe (11) à pistons axiaux, pouvant être commandé au moyen d'une vanne (21) proportionnelle et dans lequel il est prévu un signal load-sensing fourni par celle-ci pour réguler l'angle de pivotement de la pompe (11) à pistons axiaux, **caractérisé en ce que** le circuit (9) pour du fluide a, dans un conduit (35) de retour, conduisant du fluide revenant du moteur (3) hydraulique, un filtre (39, 41) d'aspiration de retour, dont le côté (43) propre est relié, par une soupape (45) élévatrice de pression et par une soupape (49) de post aspiration, à un réservoir (47) de fluide ainsi qu'au côté (57) d'aspiration de la pompe (11) à pistons axiaux.

2. Dispositif d'entraînement suivant la revendication 1, **caractérisé en ce qu'**il est prévu une vanne proportionnelle sous la forme d'une électrovanne (21) à 4/3 voies.

3. Dispositif d'entraînement suivant l'une des revendications précédentes, **caractérisé en ce qu'**il est prévu un refroidisseur (37), monté dans le conduit (35) de retour, en amont du filtre (39, 41) d'aspiration de retour.

4. Dispositif d'entraînement suivant l'une des revendications précédentes, **caractérisé en ce qu'**il est prévu une pompe (65) à cylindrée constante, qui est reliée à la prise de force (13) et qui envoie, à l'entrée du filtre (39, 41) d'aspiration de retour, à partir du réservoir (47), une quantité de fluide, qui compense au moins la perte de fluide provenant de l'évacuation d'huile (67, 69) de fuite.

5. Dispositif d'entraînement suivant la revendication 4, **caractérisé en ce qu'**il est prévu un moteur (71) hydraulique auxiliaire, qui peut être entraîné par le courant en volume produit par la pompe (65) à cylindrée constante et qui est prévu pour l'actionnement d'équipements (73) secondaires.

6. Dispositif d'entraînement ayant les caractéristiques des revendications 3 et 5, **caractérisé en ce qu'**un moteur (73) ventilé associé au refroidisseur (37) peut être entraîné comme équipement de courant secondaire par le moteur (71) hydraulique auxiliaire.

7. Dispositif d'entraînement suivant l'une des revendications 4 à 6, **caractérisé en ce qu'**il est prévu une pompe à cylindrée constante sous la forme d'une pompe (65) à engrenage.
